# EUROPÄISCHE PATENTANMELDUNG

(11) **EP 0 616 167 A1**
(43) Veröffentlichungstag der Anmeldung: **21.09.1994**
(21) Anmeldenummer: 94102753.4
(22) Anmeldetag: 24.02.1994
(51) Int. Cl.: F16L 55/26

(54) **Einrichtung zum Ein- und Ausschleusen eines Molches in eine molchbare Leitung**

(30) Priorität: 13.03.1993 DE 9303722 U
(71) Anmelder: PFEIFFER CHEMIE-ARMATURENBAU GmbH, D-47906 Kempen (DE)
(72) Erfinder: Stolzenberg, Lorenz, D-41749 Viersen (DE)
(74) Vertreter: Sroka, Peter-Christian, Dipl.-Ing.

(57) **Zusammenfassung**

Eine Einrichtung zum Ein- und Ausschleusen eines Molches in eine molchbare Leitung ist gekennzeichnet durch ein an die molchbare Leitung anflanschbares, einen geradlinien Durchgangskanal (2) aufweisendes Gehäuse (1), in dem eine Kugel (3) abdichtend gelagert ist, die eine in ihrem Querschnitt an den Querschnitt des Molches (6) angepaßte Sacklochbohrung (5) aufweist und um eine senkrecht zur Achse des Durchgangskanals (2) liegende Achse um 180^{o} derart drehbar ist, daß das offene Ende der Sacklochbohrung (5) in den Endstellungen der Kugel (3) entweder der einen oder der anderen Öffnung (2.1; 2.2) des Durchgangskanals (2) gegenüberliegt.

## Beschreibung

Zum Reinigen oder Überprüfen von hohlen Gegenständen, insbesondere Rohrleitungen, ist es üblich, durch sogenannte Molchschleusen Molche in die Rohrleitung einzuführen, in denen sie pneumatisch oder hydraulisch, beispielsweise durch einen Ölstrom, vorwärts getrieben und an geeigneter Stelle wieder in einer Schleuse aufgefangen werden, um sie wieder aus dem System auszuschleusen.

Der Erfindung liegt die Aufgabe zugrunde, eine derartige Ein- und Ausschleus-Einrichtung, eine sogenannte Molchschleuse, so zu gestalten, daß diese Einrichtung ein gefahrloses Ein- und Ausschleusen eines oder mehrerer Molche ermöglicht.

Zur Lösung dieser Aufgabe ist die erfindungsgemäße Vorrichtung gekennzeichnet durch ein an die molchbare Leitung anflanschbares, einen geradlinigen Durchgangskanal aufweisendes Gehäuse, in dem eine Kugel abdichtend gelagert ist, die eine in ihrem Querschnitt an den Querschnitt des Molches angepaßte Sacklochbohrung aufweist und um eine senkrecht zur Achse des Durchgangskanals liegende Achse um 180^{o} derart drehbar ist, daß das offene Ende der Sacklochbohrung in den Endstellungen der Kugel entweder der einen oder der anderen Öffnung des Durchgangskanals gegenüberliegt. Die Anordnung bzw. Schaltung der Kugel ist überschneidungsfrei, so daß zu keiner Zeit eine Druckverbindung zum Rohrleitungssystem besteht.

An das innere Ende der Sacklochbohrung schließt vorzugsweise eine Entlüftungsbohrung an, die in einer der beiden Endstellungen der Kugel an eine weiterführende Entlüftungsbohrung anschließt.

Erfindungsgemäß sind weitere, in bestimmten Drehstellungen der Kugel in die Sacklochbohrung mündende Bohrungen als Luftanschluß- oder Druckentlastungsbohrungen sowie als Anschlüsse für Initiatoren und/oder für die Kontaminationssicherung vorgesehen.

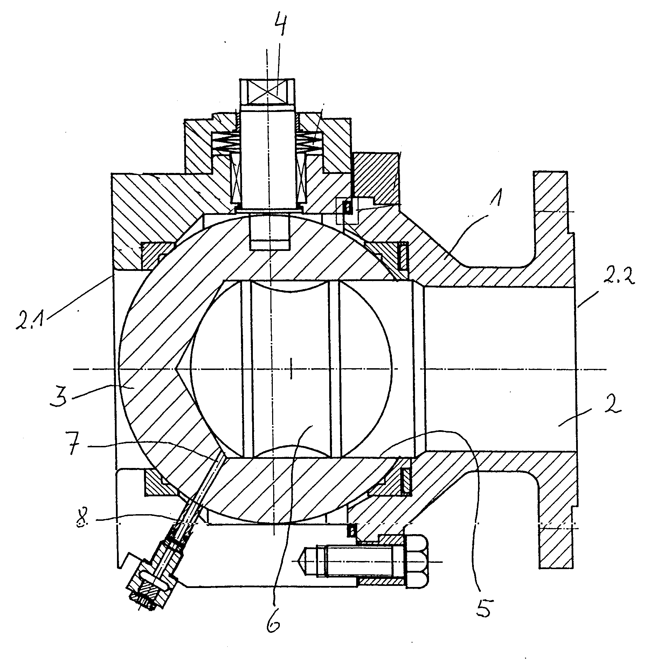

Die Erfindung wird anhand der Zeichnung näher beschrieben.

Ein an ein Rohrleitungssystem anflanschbares Gehäuse 1 ist mit einem geradlinigen Durchgangskanal 2 versehen. Innerhalb des Gehäuses 1 ist eine Kugel 3 abdichtend gelagert, die mittels einer Stellspindel 4 um eine senkrecht zur Achse des Durchgangskanals 2 liegende Achse um 180^{o} drehbar ist. Die Kugel 3 ist mit einer Sacklochbohrung 5 versehen, die der einen Öffnung 2.2 des Durchgangskanals 2 derart gegenüberliegt, daß ein durch diese Öffnung ankommender Molch 6 in die Sacklochbohrung 5 der Kugel 3 eingeschoben wird. Die Entlüftung erfolgt durch eine an das innere Ende der Sacklochbohrung 5 anschließende Entlüftungsbohrung 7, die in der in der Zeichnung dargestellten Endstellung der Kugel an eine nach außen weiterführende Entlüftungsbohrung 8 anschließt.

Zum Ausschleusen des Molches 6 wird die Kugel 3 mittels der Stellspindel 4 zusammen mit dem in die Sacklochbohrung 5 eingeschobenen Molch 6 um 180^{o} gedreht, derart, daß die Öffnung der Sacklochbohrung 5 nunmehr der in der Zeichnung links dargestellten Öffnung 2.1 gegenüberliegt, so daß der Molch zur Entnahme zugänglich ist.

Die Einschleusung eines Molches in das Rohrleitungssystem erfolgt in umgekehrter Reihenfolge, indem der Molch durch die Öffnung 2.1 in die Sacklochbohrung 5 eingeschoben und die Kugel 3 anschließend wieder um 180^{o} in die in der Zeichnung dargestellte Position gedreht wird.

Die erfindungsgemäße Einrichtung ist ausrüstbar mit zusätzlichen Luftanschlußbohrungen, einer Kontaminationssicherung, Druckentlastungsbohrungen sowie Anschlüssen für Initiatoren.

## Patentansprüche

1. Einrichtung zum Ein- und Ausschleusen eines Molches in eine molchbare Leitung, gekennzeichnet durch ein an die molchbare Leitung anflanschbares, einen geradlinien Durchgangskanal (2) aufweisendes Gehäuse (1), in dem eine Kugel (3) abdichtend gelagert ist, die eine in ihrem Querschnitt an den Querschnitt des Molches (6) angepaßte Sacklochbohrung (5) aufweist und um eine senkrecht zur Achse des Durchgangskanals (2) liegende Achse um 180^{o} derart drehbar ist, daß das offene Ende der Sacklochbohrung (5) in den Endstellungen der Kugel (3) entweder der einen oder der anderen Öffnung (2.1; 2.2) des Durchgangskanals (2) gegenüberliegt.

2. Einrichtung nach Anspruch 1, dadurch gekennzeichnet, daß an das innere Ende der Sacklochbohrung (5) eine Entlüftungsbohrung (6) anschließt, die in einer der beiden Endstellungen der Kugel (3) an eine nach außen weiterführende Entlüftungsbohrung (8) anschließt.

3. Einrichtung nach Anspruch 1 oder 2, dadurch gekennzeichnet, daß weitere in bestimmten Drehstellungen der Kugel (3) in die Sacklochbohrung (5) der Kugel (3) mündende Bohrungen als Luftanschluß- oder Druckentlastungsbohrungen sowie als Anschlüsse für Initiatoren und/oder für die Kontaminationssicherung vorgesehen sind.
